# EUROPÄISCHE PATENTSCHRIFT

(11) **EP 2 621 743 B1**
(45) Veröffentlichungstag und Bekanntmachung des Hinweises auf die Patenterteilung: **01.03.2017**
(21) Anmeldenummer: 11734140.4
(22) Anmeldetag: 22.07.2011
(51) Int. Cl.: B60G 21/055

(54) **GETEILTER WANKSTABILISATOR**
SPLIT ROLL STABILIZER
STABILISATEUR DE ROULIS EN DEUX PARTIES

(30) Priorität: 07.07.2011 DE 102011078819; 30.09.2010 DE 102010046995
(43) Veröffentlichungstag der Anmeldung: 07.08.2013
(73) Patentinhaber: Schaeffler Technologies AG & Co. KG, 91074 Herzogenaurach (DE)
(72) Erfinder: MAYER, Ralf, 91074 Herzogenaurach (DE); KRAUS, Manfred, 91074 Herzogenaurach (DE); WITTMANN, Ulrich, 96178 Pommersfelden (DE)
(86) Internationale Anmeldenummer: PCT/EP2011/062593
(87) Internationale Veröffentlichungsnummer: WO 2012/041556

(56) Entgegenhaltungen:
- DE-A1-102006 040 109
- DE-A1-102008 001 006
- DE-A1-102009 028 386
- DE-A1-102010 037 555

## Beschreibung

Die vorliegende Erfindung betrifft einen geteilten Wankstabilisator. Wankstabilisatoren werden zum Vermeiden von Wankbewegungen des Fahrzeugaufbaus gegenüber der Fahrbahn eingesetzt.

Bei aktiven Wankstabilisatoren kann zwischen zwei Stabilisatorteilen des Wankstabilisators ein Aktuator wirksam angeordnet sein. Der Aktuator kann beide Stabilisatorteile mit einem Torsionsmoment beaufschlagen. Der Aktuator kann beispielsweise einen hydraulischen oder einen elektrischen Antrieb aufweisen. Unter Betätigung des Aktuators werden die beiden Stabilisatorteile zueinander verdreht und auf Torsion belastet, so dass ein Torsionsmoment in den Stabilisatorteilen anliegt. Die Stabilisatorteile können als Drehstabfedern ausgebildet sein.

Bei schnellen Fahrtrichtungswechseln neigt der Fahrzeugaufbau zu Wankbewegungen, die mithilfe eines aktiven Wankstabilisators kompensiert werden können.

Damit der Aktuator gezielt eingesetzt werden kann, werden Parameter wie eine Wankbewegung des Fahrzeugaufbaus oder eine Querbeschleunigung des Fahrzeugs erfasst. Mit diesen Parametern kann der Aktuator gezielt betätigt werden, um einem Wanken entgegen zu wirken. Für die gezielte Betätigung des Aktuators wird üblicherweise eine Regeleinrichtung eingesetzt, die mit den eingangsseitigen Parametern eine Betätigung des Aktuators für eine angestrebte Kompensation der Wankbewegung ermöglicht.

In DE-A-102006040109 wird mittels eines Magnetsensors ein Verdrehungswinkel eines Teils eines Stabilisatorstabs gemessen, eine Steuereinrichtung ermittelt dann aus diesem Verdrehungswinkel das am Stabilisatorstabteil anliegende Drehmoment. ¶

In DE-A-102008001006 wird in einer Bohrung in einem Bauteil einer Radaufhängung eine magnetisch kodierte Hülse eingebracht, mithilfe dieser Hülse wird eine Verformung gemessen, keine Kraft oder Drehmoment. Wie in DE-A-102006040109 wird dann aus dem Verformungswert eine Kraft oder ein Drehmoment ermittlelt. ¶

Aufgabe der vorliegenden Erfindung war es, einen alternativen geteilten Wankstabilisator anzugeben.

Erfindungsgemäß wurde diese Aufgabe durch den geteilten Wankstabilisator gemäß den unabhängigen Ansprüchen 1 und 2 gelöst. Mit dem erfindungsgemäß vorgesehenen Sensor zur Ermittlung des anliegenden Torsionsmomentes in den Stabilisatorteilen kann das anliegende Torsionsmoment als Parameter bereit gestellt werden; eine gezielte Betätigung des anschließbaren Aktuators ist somit ermöglicht.

Der Aktuator kann wirksam zwischen den beiden Stabilisatorteilen angeordnet sein, um ein erzeugtes Torsionsmoment einerseits in das eine Stabilisatorteil und andererseits in das andere Stabilisatorteil einzuleiten.

Unter einer Ermittlung des wirkenden Torsionsmomentes wird das Messen des in den Stabilisatorteilen wirkenden Torsionsmomentes verstanden.

Der Sensor erfasst eine Veränderung an dem Stabilisatorteil, die Folge der Einwirkung des Torsionsmomentes ist. Diese Veränderung kann eine Verdrehung des Stabilisatorteiles sein.

Die Stabilisatorteile können bei erfindungsgemäßen Wankstabilisatoren als Drehstabfedern ausgebildet sein, die auf Torsion belastet werden und in sich verdrehen können.

Ein berührungsloses Messen des Drehmomentes vermeidet einen direkten Kontakt eines Sensors mit dem Stabilisatorteils.

Für ein berührungsloses Messen dieses Drehmomentes ist erfindungsgemäß ein an sich bekanntes magnetostriktives Messprinzip vorgesehen, wie es in der Druckschrift WO 2006/013093 A2 offenbart ist.

Bei diesem Messprinzip wird eine Veränderung der magnetischen Eigenschaft erfasst. In dem Internetauftritt der Firma NCTE werden hierzu Ausführungen gemacht, die nachstehend auszugsweise und teilweise geändert wiedergegeben sind:

Wird ein ferromagnetischer Kristall magnetisiert, so tritt mit wachsender Feldstärke eine Formänderung des magnetisierten Kristalls auf, die als magnetostriktiver Effekt bezeichnet wird.

Der wichtigste Anteil der Magnetostriktion ist der Joule-Effekt. Er basiert darauf, dass sich die so genannten Weiss'schen Bezirke in die Magnetisierungsrichtung drehen und ihre Grenzen verschieben. Hierdurch erfolgt eine Formänderung des ferromagnetischen Körpers, wobei sein Volumen konstant bleibt. Mit der Bezeichnung magnetostriktiver Effekt wird dieser Effekt beschrieben, da die Volumenänderung der gängigen magnetostriktiven Werkstoffe in ihrer Wirkung vernachlässigt werden kann.

Eine dauerhafte Speicherung einer "in-sich-geschlossenen" Magnetfeldstruktur in ferromagnetischen Materialien ist ermöglicht. Mit Hilfe von magnetisch kodierten Messwellen können mechanische Kräfte in Echt-Zeit gemessen und bestimmt werden.

Das "Pulsed Current Magnetic Enkoding" bezeichnet ein magnetisches Kodierungsverfahren. Hierbei werden mehrere verschiedene Signalfrequenzen mit unterschiedlich gepulster Stromstärke über einen zuvor festgelegten Bereich einer Welle geleitet, und dabei "in-sich-geschlossene" Magnetfeldstrukturen in die Messwelle einprogrammiert. Dieser Vorgang muss nur einmal durchgeführt werden, da die hierbei gebildeten Strukturen in sich geschlossen sind und somit einen stabilen Zustand darstellen.

Im Unterschied zu anderen bekannten Verfahren zur Messung von Kräften können mit diesem magnetischen Kodierungsverfahren berührungslos Drehmomente, Biegekräfte, axiale Kräfte, radiale Kräfte und Scherkräfte gemessen werden. Es können an ein und derselben kodierten Messstelle mehrere physikalische Parameter gleichzeitig gemessen werden. Darüber hinaus ist der Betriebstemperaturbereich von -50°C bis über +250°C gewährleistet. Der Sensor ist unempfindlich gegen Schmutz, Öl, Wasser sowie mechanische Schockbelastungen und verfügt über eine sehr hohe Messgenauigkeit und eine Ausgangssignallinearität von bis zu 0.05% Die Signalbandbreite kann bis zu 30kHz betragen und es ist keine regelmäßige Wartung oder Nachkalibrierung des Sensors erforderlich.

Der Primärsensor kann eine Region der Welle sein, die magnetisch kodiert wird. Es ist ausreichend, den Kodierungsprozess lediglich einmal durchzuführen, vorzugsweise bevor die Welle an ihrem vorgesehenen Einbauort eingebaut wird. Die mechanischen Eigenschaften der Welle werden durch den Kodierungsprozess nicht beeinflusst. Die Welle sollte aus ferromagnetischem Material bestehen. Im Allgemeinen ist industrieller Stahl, der zwischen 1.5% und 8% Ni enthält, eine gute Basis für einen Primärsensor. Der Primärsensor wandelt die anliegenden Kräfte in ein magnetisches Signal um, das auf der Oberfläche der Welle erfasst werden kann. Die Welle kann als Voll- oder Hohlwelle ausgeführt sein.

Der Sekundärsensor ist eine Anordnung von Magnetfeld-Sensoren, die in unmittelbarer Nähe der magnetisch kodierten Region der Welle platziert werden.

Da die Sekundärsensoren die Welle nicht berühren, kann die Welle frei rotieren. Der Sekundärsensor setzt Änderungen des magnetischen Feldes - verursacht durch Kräfte im Primär-Sensor - in elektrische Information um.

Das sekundäre Sensormodul kann sowohl außen als auch innerhalb der Welle platziert werden, da das Sensorsignal auf der Außen- wie auch auf der Innenseite ermittelt werden kann.

Der Sekundärsensor kann durch sehr kleine Spulen gebildet sein, um die magnetischen Veränderungen des Primärsensors unter Drehmoment hoch auflösend zu messen. Die Spulen können paarweise angeordnet sein, um eine Gleichtaktunterdrückung durch Differentialmessungen zu ermöglichen, und somit die Effekte von externen Magnetfeldern zu kompensieren. Die Gleichtaktunterdrückung beruht hauptsächlich auf einer einwandfreien Anordnung und guten Abstimmung der Spulen zueinander.

Zum Messen von Drehmomenten kann der Sekundärsensor parallel zur Achse der Welle und symmetrisch zum Zentrum des magnetisch kodierten Bereich - also des Primärsensors - angeordnet werden. Die Spulen des Sekundärsensors werden in der Regel paarweise angeordnet; das so genannte Spulenpaar. Die Spulenpaare werden je nach Anzahl symmetrisch über den Umfang der Welle verteilt. Durch das Verwenden von mehr als einem Spulenpaar können radiale Toleranzen der Welle kompensiert werden.

Die vorliegende Erfindung hat erkannt, dass ein nach diesem magnetostriktiven Prinzip arbeitender Sensor - wie er beispielsweise vorstehend beschrieben ist - hervorragend für einen aktiven Wankstabilisator geeignet ist.

Bei erfindungsgemäßen Wankstabilisatoren umfasst der Sensor den magnetisch kodierten Primärsensor sowie den Sekundärsensor, der Veränderungen der magnetischen Eigenschaften des Primärsensors in ein elektrisches Signal umwandeln kann.

Der Primärsensor kann beispielsweise durch eine Welle oder durch eine Hülse gebildet sein, die magnetisch kodiert ist; diese Kodierung kann in der oben beschriebenen Weise erfolgen oder auch auf andere Art und Weise.

Der Sekundärsensor kann als passives Element ausgebildet sein und eine Spule umfassen, die magnetische Veränderungen des Primärsensors erfassen und in ein elektrisches Signal umsetzen kann. Dieses Signal kann beispielsweise einer Regeleinrichtung zugeführt werden, die für eine Betätigung des Aktuators vorgesehen ist. Der Sekundärsensor kann auch als aktives Element ausgeführt sein.

Die Erfindung ermöglicht, die Sensorik zur Regelung des Aktuators direkt in den Drehstab zu integrieren, um als autarkes System verbaut werden zu können. Dies kann parallel zum Drehstab oder direkt im Kraftfluss oder Lastpfad der Drehstabfeder geschehen. Im Fall der ersten Alternative überträgt der Primärsensor lediglich einen Teil des anliegenden Dreh- oder Torsionsmomentes; im Fall der zweiten Alternative überträgt der der Primärsensor das volle anliegende Dreh- oder Torsionsmoment.

Der Primärsensor kann durch magnetisch kodiertes Material gebildet sein. Ein magnetisch kodierter Primärsensor kann am oder im Drehstab angebracht oder mit diesem verbunden sein. Über den Primärsensor wird ein Sekundärsensor platziert, der die Richtung der Feldlinien misst. Werden die Drehstabfedern auf Torsion belastet, so ändert sich die Steigung der Feldlinien, wobei die Änderung durch den Sekundärsensor gemessen wird.

Die Messung der Steigungsänderung - in positiver und in negativer Lastrichtung - kann für eine Regelung des Aktuatormomentes zugrunde gelegt werden.

Ein erfindungsgemäßer Wankstabilisator gemäß Anspruch 1 sieht die direkte Integration des Primärsensors in den Lastpfad vor. In diesem Fall überträgt der Primärsensor das volle Torsionsmoment des Wankstabilisators. Beispielsweise kann ein Teil des Stabilisatorteiles magnetisch kodiert werden und den Primärsensor bilden. Somit beschränkt sich die Anzahl der Bauteile zur Messung des Torsionmomentes auf ein Minimum.

Die Adaption des Primärsensors kann gemäß dem unabhängigem Anspruch 2 parallel zum Lastpfad am Stabilisatorteil erfolgen. In diesem Fall überträgt der Primärsensor lediglich einen kleinen Teil des Torsionsmomentes, das auch als Mess-Torsionsmoment oder als Mess-Drehmoment bezeichnet werden kann; das Stabilisatorteil an sich überträgt den größten Teil des Torsionsmomentes. Ebenso kann der Durchmesser der Hülse vergrößert werden, um eine Verbesserung der Messergebnisse zu erzielen. Je größer der Durchmesser, desto größer ist der in Umfangsrichtung gemessene Verdrehweg. Die Drehsteifigkeit des Stabilisatorteils und die Hülse sind in diesem Fall derart aufeinander abgestimmt, dass eine Torsion der Hülse einem bestimmten zugeordneten wirksamen Drehmoment in dem Stabilisatorteil entspricht.

Wenn der Primärsensor durch eine Hülse gebildet ist, die auf das Stabilisatorteil aufgesetzt ist, kann die Hülse mit ihren beiden axialen Enden jeweils an dem Stabilisatorteil drehfest angeordnet werden, wobei die Hülse unter Belastung des Wankstabilisators verdreht oder tordiert, so dass der Sekundärsensor das anliegende Torsionsmoment erfassen kann. Je größer der axiale Abstand der beiden Enden zueinander ist, desto größer ist der Verdrehwinkel, und desto genauer kann die Messung erfolgen.

Die Adaption des magnetisch kodierten Primärsensors kann parallel zum Lastpfad zwischen einem Flansch und einem Stabilisatorlager vorgesehen sein. Der Flansch kann an dem Ende des Stabilisatorteiles angebracht sein, das dem Aktuator zugewandt ist. Der Flansch kann an den Aktuator angeschlossen werden, um das Drehmoment zu übertragen. Das Stabilisatorlager lagert das Stabilisatorteil am Fahrzeugaufbau und ermöglicht Drehbewegungen des Stabilisatorteiles um die Torsionsachse.

Die Anbindung des magnetisch kodierten Primärsensors an das Stabilisatorteil kann reibschlüssig mittels Pressverband, stoffschlüssig oder formschlüssig erfolgen; der Primärsensor kann aufgespritzt, aufgebklebt oder angeschweißt werden.

Die Länge des magnetisch kodierten Primärsensors zwischen Flansch und Lagerstelle kann auf maximale Länge erstreckt werden, um einen möglichst großen Verdrehwinkel zu erhalten, so dass die Sensorauflösung verbessert ist.

Die Adaption des magnetisch kodierten Primärsensors kann parallel zum Lastpfad im Innenbereich der rohrförmigen Drehstabfeder erfolgen.

Nachstehend wird die Erfindung anhand von sechs Figuren näher erläutert. Es zeigen:
- Figur 1: einen erfindungsgemäßen geteilten Wankstabilisator,
- Figur 2: einen vergrößerten Ausschnitt aus Figur 1,
- Figur 3: eine erfindungsgemäße Variante in einer Darstellung wie in Figur 2,
- Figur 4: eine weitere erfindungsgemäße Variante in einer Darstellung wie in Figur 2,
- Figur 5: eine weitere erfindungsgemäße Variante in einer Darstellung wie in Figur 2, und
- Figur 6: eine weitere erfindungsgemäße Variante in einer Darstellung wie in Figur 2.

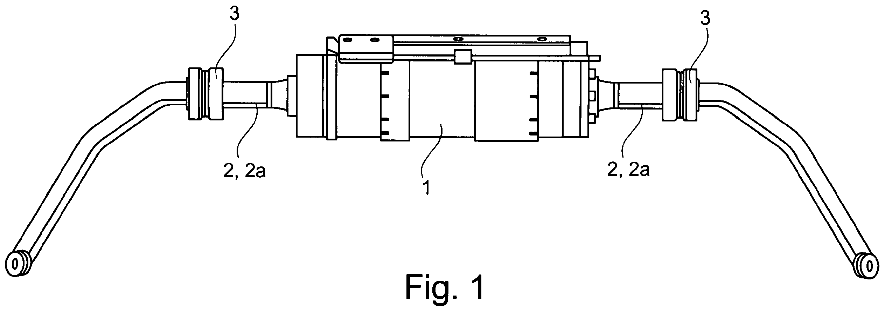

Figur 1 zeigt einen erfindungsgemäßen geteilten Wankstabilisator mit einem angeschlossenen Aktuator 1. Der Aktuator 1 ist wirksam zwischen zwei jeweils als Drehstabfeder 2 ausgebildeten Stabilisatorteilen 2a angeordnet. Beide Stabilisatorteile 2a sind jeweils über ein Stabilisatorlager 3 an einem hier nicht dargestellten Fahrzeugaufbau drehbar gelagert. Der Aktuator kann einen Motor mit einem angeschlossenen Getriebe aufweisen, wobei ein Aktuatorgehäuse an das eine Stabilisatorteil 2a und eine Ausgangswelle an das andere Stabilisatorteil angeschlossen werden kann. Unter Betätigung des Aktuators werden die angeschlossenen Stabilisatorteile 2a auf Torsion beansprucht.

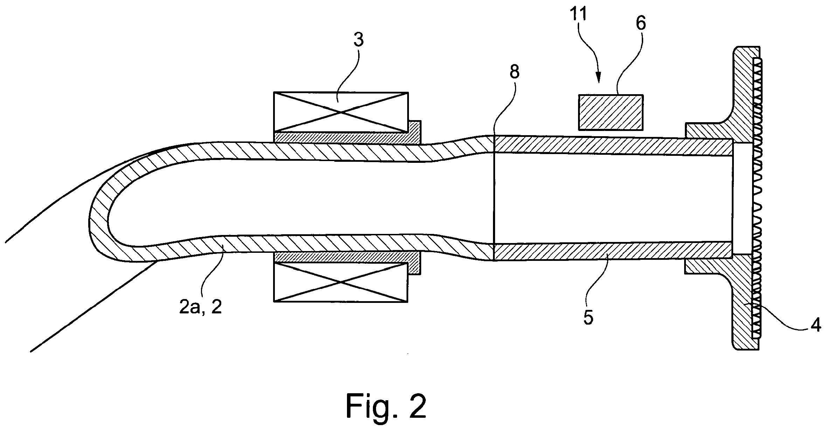

Figur 2 zeigt einen vergrößerten Ausschnitt aus Figur 1. Ein Sensor 11 zur Bestimmung des Aktuatormomentes ist in die Drehstabfeder 2 integriert. Das Aktuatormoment ist das in den Stabilisatorteilen 2a wirkende Torsionsmoment. Eine berührungslose Torsionsmomentmessung kann direkt im Lastpfad der Drehstabfeder 2 erfolgen, wobei zumindest ein Teilstück der Drehstabfeder 2 aus magnetostriktivem, magnetisch kodiertem Stahl hergestellt ist. Dieses Teilstück bildet einen Primärsensor 5. Dieses Teilstück kann aus einem Rohrstück gebildet sein, das einerseits stoffschlüssig mit dem Stabilisatorteil 2a und andererseits fest mit einem Flansch 4 verbunden ist. Dieser Primärsensor 5 überträgt das volle Torsionsmoment des Wankstabilisators.

Der Flansch 4 kann auch als Anschlussteil oder als Verbindungsteil bezeichnet werden, das einerseits drehfest an das Stabilisatorteil 2a und das andererseits drehfest an den Aktuator 1 angeschlossen werden kann. Der Flansch 4 kann an den Aktuator 1 mit Schrauben angeschraubt werden; der Flansch 4 kann auch stoffschlüssig mit dem Aktuator 1 verbunden werden. Der Flansch 4 kann stoffschlüssig, reibschlüssig oder kraftschlüssig mit dem Stabilisatorteil verbunden sein. Das Anschlussteil kann eine an das Stabilisatorteil 2a und die Anschlussstelle des Aktuators 1 angepasste Form aufweisen. Der Flansch 4 kann an den in Figur 1 abgebildeten Aktuator 1 angeschlossen sein, um Torsionsmomente zwischen dem Aktuator 1 und den angeschlossenen Stabilisatorteilen 2a zu übertragen.

Ein Sekundärsensor 6 ist außerhalb der Drehstabfeder in der Nähe des durch das Rohrstück gebildeten Primärsensors 5 angeordnet und misst die durch Torsion des Primärsensors 5 verursachte Änderung der Steigung der Feldlinien. Der Sekundärsensor 6 bildet einen Magnetfeldsensor 6a.

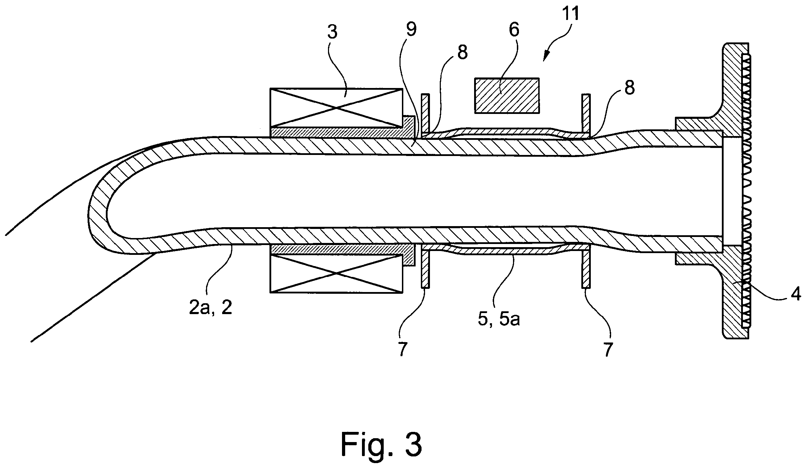

Die Adaption des magnetisch kodierten Primärsensors 5 an die Drehstabfeder kann wie in Figuren 3 bis 6 ersichtlich auch parallel zum Lastpfad erfolgen. Bei diesen erfindungsgemäßen Weiterbildungen überträgt der Primärsensor nicht das volle wirksame Torsionsmoment, sondern lediglich ein Mess-Torsionsmoment, das abhängig ist von dem in der Drehstabfeder wirkenden Torsionsmoment.

Der erfindungsgemäße geteilte Wankstabilisator gemäß Figur 3 unterscheidet sich von dem aus der Figur 2 durch einen modifizierten Primärsensor 5. Gemäß Figur 3 ist der Primärsensor 5 durch eine Hülse 5a gebildet, die mittels eines durch eine Halteklammer 7 gebildeten Befestigungselementes oder durch stoffschlüssige Verbindung 8 direkt am Drehstabfederrücken 9 befestigt ist. Der Drehstabfederrücken 9 ist durch das Stabilisatorteil 2a gebildet. Der Figur 3 ist zu entnehmen, dass die Halteklammer 7 an beiden axialen Enden der Hülse 5a angeordnet ist, so dass die axialen Enden drehfest an dem Drehstabfederrücken 9 angeordnet sind. Figur 2 zeigt zwei Varianten, wie die Hülse 5a am Drehstabfederrücken drehfest angeordnet werden kann: oberhalb der Längsachse des rohrförmigen Stabilisatorteiles 2a ist eine stoffschlüssige Verbindung der axialen Enden der Hülse 5a mit dem Drehstabfederrücken 9 vorgesehen. Unterhalb der Längsachse des rohrförmigen Stabilisatorteiles 2a ist die beschriebene Klammerverbindung der axialen Enden der Hülse 5a mit dem Drehstabfederrücken 9 vorgesehen.

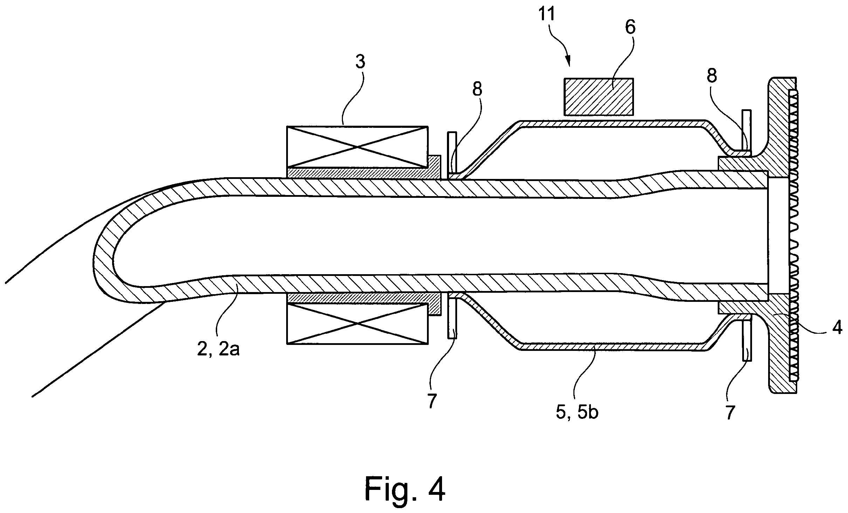

Der erfindungsgemäße geteilte Wankstabilisator gemäß Figur 4 unterscheidet sich von dem aus der Figur 3 lediglich dadurch, dass das von dem Stabilisatorlager 3 abgewandte axiale Ende der Hülse 5b mittels der Halteklammer 7 oder durch stoffschlüssige Verbindung 8 am zylindrischen Teil des Flansches 4 befestigt ist. Dies hat den Vorteil, auf geringem Bauraum eine maximal mögliche Messlänge zu generieren. Die Hülse 5b gemäß Figur 4 ist gegenüber der Hülse 5a gemäß Figur 3 länger, so dass ein größerer Verdrehwinkel in der Hülse 5b generiert wird.

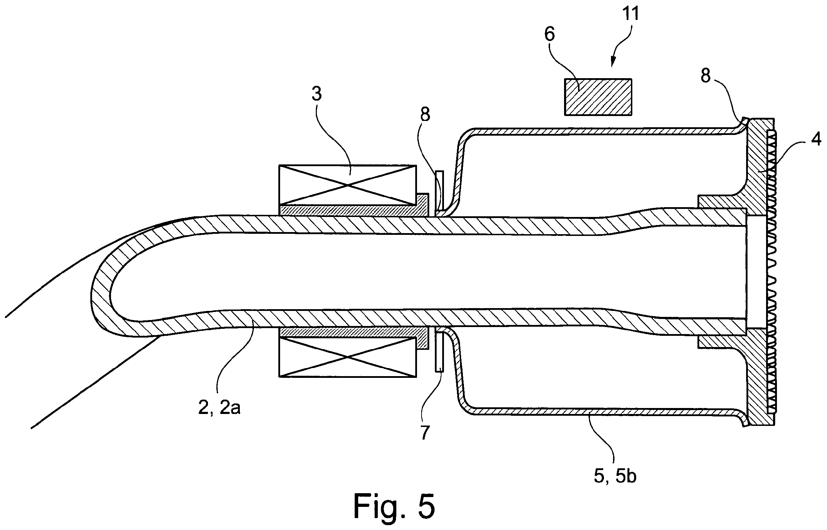

Der erfindungsgemäße geteilte Wankstabilisator gemäß Figur 5 unterscheidet sich von dem aus der Figur 4 lediglich dadurch, dass das von dem Stabilisatorlager 3 abgewandte axiale Ende der Hülse 5b mittels der Halteklammer 7 oder durch stoffschlüssige Verbindung 8 am Außendurchmesser des Flansches 4 oder an dessen Planfläche oder Stirnfläche befestigt ist. Dies hat den Vorteil, die größtmögliche Messlänge zwischen dem Stabilisatorlager 3 und dem Flansch 4 zu generieren.

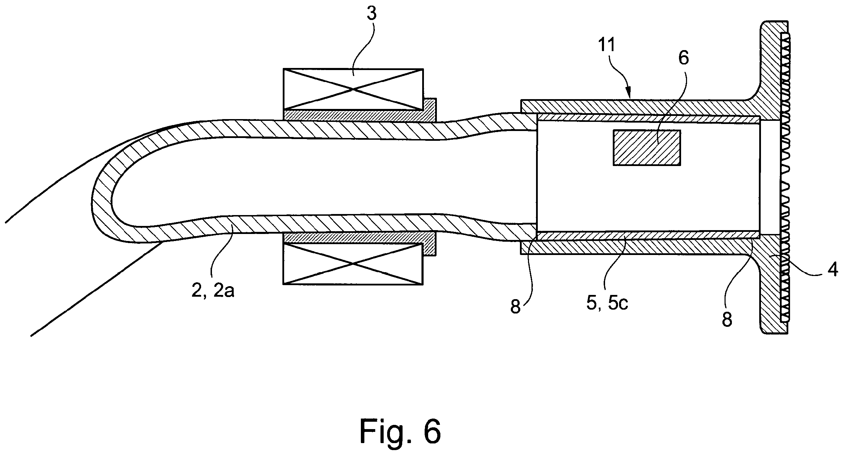

Gemäß Figur 6 ist die Adaption dadurch gelöst, dass eine den Primärsensor 5 bildende Hülse 5c mittels stoffschlüssiger Verbindung 8 innen liegend in der Drehstabfeder 2 zwischen dem Flansch 4 und der Drehstabfeder 2 angebracht ist. Der Sekundärsensor 6 ist radial innerhalb der Hülse 5c angeordnet. Die innen liegende Anordnung schützt sowohl den Primärsensor 5 als auch den Sekundärsensor 6 vor unerwünschter Fremdeinwirkung.

Bei den hier beschriebenen Varianten sind die Hülsen 5a, 5b, 5c in anderen Worten ausgedrückt mit ihren axialen Enden drehfest angeordnet, so dass unter Torsion der Stabilisatorteile 2a die Enden der Hülsen verdreht werden.

Die Sensoren 11 können bei erfindungsgemäßen geteilten Wankstabilisatoren an lediglich einem der beiden Stabilisatorteile 2a angeordnet sein; es ist jedoch möglich, beide Stabilisatorteile mit je einem Sensor 11 zu versehen.

### Bezugszahlenliste

- 1: Aktuator
- 2: Drehstabfeder
- 2a: Stabilisatorteil
- 3: Stabilisatorlager
- 4: Flansch
- 5: magnetisch kodierter Primärsensor
- 5a: Hülse
- 5b: Hülse
- 5c: Hülse
- 6: Sekundärsensor
- 6a: Magnetfeldsensor
- 7: Halteklammer
- 8: stoffschlüssige Verbindung
- 9: Drehstabfederrücken
- 10:
- 11: Sensor

## Patentansprüche

1. Geteilter Wankstabilisator eines Kraftfahrzeuges, zwischen dessen beiden Stabilisatorteilen (2a) ein Aktuator (1) für eine Torsion der Stabilisatorteile (2a) wirksam angeordnet werden kann, wobei ein Sensor (11) zur Ermittlung eines in den Stabilisatorteilen (2a) wirkenden Torsionsmomentes vorgesehen ist, und wobei ein magnetisch kodierter Primärsensor (5) an dem Stabilisatorteil (2a) angeordnet ist, wobei ein Magnetfeldsensor (6a) als Sekundärsensor (6) vorgesehen ist, der Änderungen des magnetischen Feldes des Primärsensors (5) in ein elektrisches Signal umwandelt, welcher Primärsensor (5) durch einen Abschnitt des Stabilisatorteiles (2a) gebildet ist, der aus ferromagnetischem Material gebildet und magnetisch kodiert ist, wobei das wirksame Torsionsmoment in diesen Abschnitt eingeleitet wird.

2. Geteilter Wankstabilisator eines Kraftfahrzeuges, zwischen dessen beiden Stabilisatorteilen (2a) ein Aktuator (1) für eine Torsion der Stabilisatorteile (2a) wirksam angeordnet werden kann, wobei ein Sensor (11) zur Ermittlung eines in den Stabilisatorteilen (2a) wirkenden Torsionsmomentes vorgesehen ist, und wobei ein magnetisch kodierter Primärsensor (5) an dem Stabilisatorteil (2a) angeordnet ist, wobei ein Magnetfeldsensor (6a) als Sekundärsensor (6) vorgesehen ist, der Änderungen des magnetischen Feldes des Primärsensors (5) in ein elektrisches Signal umwandelt, wobei der Primärsensor (5) zur Aufnahme eines Mess-Drehmomentes parallel zu dem Stabilisatorteil (2a) geschaltet ist, wobei das Mess-Drehmoment abhängig von einer Verdrehung des Stabilisatorteiles (2a) ist.

3. Geteilter Wankstabilisator nach Anspruch 2, bei dem der Primärsensor (5) durch eine an dem Stabilisatorteil (2a) angeordnete Hülse (5a, 5b, 5c) gebildet ist.

4. Geteilter Wankstabilisator nach wenigstens einem der Ansprüche 1 bis 3, zwischen dessen beiden Stabilisatorteilen (2a) der Aktuator (1) für eine Torsion der Stabilisatorteile (2a) wirksam angeordnet ist.

5. Geteilter Wankstabilisator nach Anspruch 4, bei dem das Stabilisatorteil (2a) über ein Stabilisatorlager (3) drehbar gelagert ist, wobei der Primärsensor (5) zwischen einem dem Aktuator (1) zugewandten Ende des Stabilisatorteils (2a) und dem Stabilisatorlager (3) angeordnet ist.

6. Geteilter Wankstabilisator nach Anspruch 4, bei dem die Stabilisatorteile (2a) jeweils über ein Stabilisatorlager (3) drehbar gelagert sind, wobei die Primärsensoren (5) jeweils zwischen einem dem Aktuator (1) zugewandten Ende der Stabilisatorteile (2a) und dem Stabilisatorlager (3) angeordnet sind.

7. Geteilter Wankstabilisator nach Anspruch 3, bei dem das dem Aktuator (1) zugewandte Ende des Stabilisatorteils (2a) drehfest mit einem an den Aktuator (1) angeschlossenen Flansch (4) verbunden ist, wobei die Hülse (5a, 5b, 5c) mit einem Ende drehfest mit dem Flansch (4) und mit dem anderen Ende drehfest mit dem Stabilisatorteil (2a) verbunden ist.

## Claims

1. Split anti-roll bar of a motor vehicle, between the two anti-roll bar parts (2a) of which an actuator (1) can be arranged such that it is active for a torsion of the anti-roll bar parts (2a), a sensor (11) being provided for determining a torsional moment which acts in the anti-roll bar parts (2a), and a magnetically encoded primary sensor (5) being arranged on the anti-roll bar part (2a), a magnetic field sensor (6a) being provided as a secondary sensor (6) which converts changes in the magnetic field of the primary sensor (5) into an electrical signal, which primary sensor (5) is formed by way of a section of the antiroll bar part (2a) which is formed from ferromagnetic material and is encoded magnetically, the active torsional moment being introduced into the said section.

2. Split anti-roll bar of a motor vehicle, between the two anti-roll bar parts (2a) of which an actuator (1) can be arranged such that it is active for a torsion of the anti-roll bar parts (2a), a sensor (11) being provided for determining a torsional moment which acts in the anti-roll bar parts (2a), and a magnetically encoded primary sensor (5) being arranged on the anti-roll bar part (2a), a magnetic field sensor (6a) being provided as a secondary sensor (6) which converts changes in the magnetic field of the primary sensor (5) into an electrical signal, the primary sensor (5) being connected in parallel to the anti-roll bar part (2a) in order to record a measuring torque, the measuring torque being dependent on twisting of the anti-roll bar part (2a).

3. Split anti-roll bar according to Claim 2, in which the primary sensor (5) is formed by way of a sleeve (5a, 5b, 5c) which is arranged on the anti-roll bar part (2a).

4. Split anti-roll bar according to at least one of Claims 1 to 3, between the two anti-roll bar parts (2a) of which the actuator (1) is arranged such that it is active for a torsion of the anti-roll bar parts (2a).

5. Split anti-roll bar according to Claim 4, in which the anti-roll bar part (2a) is mounted rotatably via an anti-roll bar mount (3), the primary sensor (5) being arranged between an end of the anti-roll bar part (2a) which faces the actuator (1) and the anti-roll bar mount (3).

6. Split anti-roll bar according to Claim 4, in which the anti-roll bar parts (2a) are mounted rotatably in each case via an anti-roll bar mount (3), the primary sensors (5) being arranged in each case between an end of the anti-roll bar parts (2a) which faces the actuator (1) and the anti-roll bar mount (3).

7. Split anti-roll bar according to Claim 3, in which that end of the anti-roll bar part (2a) which faces the actuator (1) is connected fixedly to a flange (4), connected to the actuator (1), so as to rotate with it, the sleeve (5a, 5b, 5c) being connected fixedly with one end to the flange (4) so as to rotate with it and being connected fixedly with the other end to the anti-roll bar part (2a) so as to rotate with it.

## Revendications

1. Stabilisateur de roulis en deux parties d'un véhicule automobile entre les deux parties de stabilisateur (2a) desquelles un actionneur (1) peut être disposé activement pour une torsion des parties de stabilisateur (2a), un capteur (11) étant prévu pour déterminer un couple de torsion agissant dans les parties de stabilisateur (2a) et un capteur principal (5) à codage magnétique étant disposé au niveau de la partie de stabilisateur (2a), un capteur de champ magnétique (6a) étant prévu sous la forme d'un capteur secondaire (6) convertissant les variations du champ magnétique du capteur principal (5) en un signal électrique, ledit capteur principal (5) étant formé par une section de la partie de stabilisateur (2a) formée à partir de matière ferromagnétique et codée de façon magnétique, le couple de torsion actif étant introduit dans cette section.

2. Stabilisateur de roulis en deux parties d'un véhicule automobile entre les deux parties de stabilisateur (2a) desquelles un actionneur (1) peut être disposé activement pour une torsion des parties de stabilisateur (2a), un capteur (11) étant prévu pour déterminer un couple de torsion agissant dans les parties de stabilisateur (2a) et un capteur principal (5) à codage magnétique étant disposé au niveau de la partie de stabilisateur (2a), un capteur de champ magnétique (6e) étant prévu sous la forme d'un capteur secondaire (6), celui-ci convertissant les variations du champ magnétique du capteur principal (5) en un signal électrique, le capteur principal (5) étant connecté parallèlement à la partie de stabilisateur (2a) pour recevoir un couple de rotation mesuré, le couple de rotation mesuré étant fonction d'une torsion de la partie de stabilisateur (2a).

3. Stabilisateur de roulis en deux parties selon la revendication 2, dans lequel le capteur principal (5) est formé par une douille (5a, 5b, 5c) disposée au niveau de la partie de stabilisateur (2a).

4. Stabilisateur de roulis en deux parties selon au moins l'une quelconque des revendications 1 à 3 entre les deux parties de stabilisateur (2a) desquelles l'actionneur (1) est disposé activement pour une torsion des parties de stabilisateur (2a).

5. Stabilisateur de roulis en deux parties selon la revendication 4, dans lequel la partie de stabilisateur (2a) est disposée de façon à pouvoir tourner via un palier de stabilisateur (3), le capteur principal (5) étant disposé entre une extrémité, orientée vers l'actionneur (1), de la partie de stabilisateur (2a) et le palier de stabilisateur (3).

6. Stabilisateur de roulis en deux parties selon la revendication 4, dans lequel les parties de stabilisateur (2a) sont respectivement disposées de façon à pouvoir tourner via un palier de stabilisateur (3), les capteurs principaux (5) étant respectivement disposés entre une extrémité, orientée vers l'actionneur (1), des parties de stabilisateur (2a) et le palier de stabilisateur (3).

7. Stabilisateur de roulis en deux parties selon la revendication 3, dans lequel l'extrémité, orientée vers l'actionneur (1), de la partie de stabilisateur (2a) est reliée solidairement en rotation à une bride (4) rattachée à l'actionneur (1), la douille (5a, 5b, 5c) étant reliée solidairement en rotation, au niveau d'une extrémité, à la bride (4) et solidairement en rotation, au niveau de l'autre extrémité, à la partie de stabilisateur (2a).
